(19) Europäisches Patentamt
European Patent Office
Office européen des brevets

(11) **EP 2 990 195 B1**

(12) **EUROPÄISCHE PATENTSCHRIFT**

(45) Veröffentlichungstag und Bekanntmachung des Hinweises auf die Patenterteilung:
**01.05.2019 Patentblatt 2019/18**

(21) Anmeldenummer: **14182258.5**

(22) Anmeldetag: **26.08.2014**

(51) Int Cl.:
**B32B 7/00** (2019.01)   **B32B 7/04** (2019.01)
**B32B 7/12** (2006.01)   **B32B 25/00** (2006.01)
**B32B 27/00** (2006.01)   **B32B 27/04** (2006.01)
**B32B 27/06** (2006.01)   **B32B 27/08** (2006.01)
**B32B 27/20** (2006.01)   **B32B 27/28** (2006.01)
**B32B 27/30** (2006.01)   **B32B 27/32** (2006.01)
**B32B 27/34** (2006.01)   **B32B 27/36** (2006.01)
**B32B 29/00** (2006.01)   **B32B 3/30** (2006.01)

(54) **GEPRÄGTE UND SCHMELZEKASCHIERTE MEHRSCHICHTVERBUNDFOLIE**

EMBOSSED AND MELT-LAMINATED MULTIPLE LAYER COMPOSITE FILM

FILM COMPOSITE MULTICOUCHES GAUFRÉ ET CONTRECOLLÉ PAR FUSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2014 EP 14182113**

(43) Veröffentlichungstag der Anmeldung:
**02.03.2016 Patentblatt 2016/09**

(73) Patentinhaber: **Profol Kunststoffe GmbH**
**83128 Halfing (DE)**

(72) Erfinder:
• **Maier, Konrad**
**83512 Wasserburg (DE)**
• **Bayer, Helmut**
**83361 Kienberg (DE)**
• **Altenweger, Josef**
**83026 Rosenheim (DE)**

(74) Vertreter: **SSM Sandmair**
**Patentanwälte Rechtsanwalt**
**Partnerschaft mbB**
**Joseph-Wild-Straße 20**
**81829 München (DE)**

(56) Entgegenhaltungen:
EP-A1- 1 728 624      WO-A1-2009/106500
WO-A1-2013/150141     JP-A- H10 230 579
US-A1- 2014 147 641

**Beschreibung**

Die Erfindung betrifft eine geprägte Mehrschichtverbundfolie umfassend eine dekortragende Substratschicht, die neben anderen Verwendungen besonders vorteilhaft als Bodenbelag, Wandverkleidung oder Möbelfolie Verwendung findet. Weiterhin betrifft die Erfindung solche Bodenbeläge, Wandverkleidungen, Möbelfolien sowie ein Verfahren zur Herstellung der erfindungsgemäßen Mehrschichtverbundfolien.

Günstige Herstellungs- und Materialpreise, leichte Verarbeitbarkeit, chemische Beständigkeit, hohe Transparenz, gute Abriebfestigkeit und hohe Elastizität haben in der Vergangenheit Polyvinylchlorid (PVC) zum vorherrschenden künstlichen Grundstoff für Bodenbeläge, Wandverkleidungen und Möbelfolien werden lassen.

Vielfältige Anwendung haben beispielsweise PVC-Folien in der Herstellung von preiswerten Möbeloberflächen, Wandverkleidungen oder Bodenbelägen gefunden, in denen Holz- oder Steinoberflächen imitiert werden, teilweise unter Verwendung von Holz, teilweise unter Verwendung von mit Holz- oder Steindesign bedruckten Papier- oder Folienschichten.

Den Vorteilen stehen Nachteile in der Umweltverträglichkeit des PVC sowie im Brandverhalten gegenüber, die die Suche nach alternativen Werkstoffen als Ersatz für das PVC befeuern.

Als Ersatzmaterialien sind vielfach Polymere wie Polyolefine, Polyamide, Polyurethane, Polystyrol, Polyester sowie deren Copolymere und Abkömmlinge vorgeschlagen worden, die ähnlich günstig und leicht zu verarbeiten sind, allerdings in Bezug auf ihre mechanischen Eigenschaften und Abriebfestigkeit dem PVC unterlegen waren. Oftmals sind die Sichtseiten herkömmlicher Bodenbeläge, Wandverkleidungen, Möbelfolien und ähnlicher Verbünde durch Lack- oder Harzschichten, bspw. aus Melaminharz, verstärkt. Dies erhöht die Kosten der Verbundfolien durch höhere Rohstoff- und Verarbeitungskosten und verschlechtert ihre Ökobilanz. EP 1 728 624 A1 beschreibt Verbundfolien umfassend (A) mindestens eine Farbschicht, enthaltend ein oder mehrere Farbpigmente, eingebettet in eine Kunststoffmatrix, und (B) mindestens eine Effektschicht, enthaltend ein oder mehrere Effektpigmente, eingebettet in eine Kunststoffmatrix, wobei

- die Verbundfolie einen Polymeranteil von mindestens 30%, bezogen auf das Gesamtgewicht der Folie aufweist,
- die Effektpigmente eine durchschnittliche Kerngröße von 5 bis 150 $\mu$m aufweisen,
- die Farbpigmente einen Kontrast in den Effektpigmenten bilden und
- die Folie durch Koextrusion der mindestens einen Farbschicht und der mindestens einen Effektschicht erhalten wird.

Die beschriebene Verbundfolie ist dazu bestimmt, mittels Klebstoff auf einen Träger oder eine Oberfläche aufgebracht zu werden.

WO 2009/016500 A1 beschreibt mehrschichtige Verbundmaterialien, umfassend als Komponenten: (A) eine Kunststoff- oder Metallfolie, (B) gegebenenfalls mindestens eine Verbindungsschicht und (C) eine Polyurethanschicht, die Kapillaren aufweist, die über die gesamte Dicke der Polyurethanschicht gehen.

JPH10230579 offenbart eine antimikrobielle Mehrschicht-Verbundfolie umfassend eine mehrschichtige Oberschicht und eine Druckschicht, wobei die mehrschichtige Oberschicht koextrudiert wird und eine Schicht aus thermoplastischem Elastomer sowie an der äußeren Oberfläche eine antimikrobielle Schicht aufweist. Die Oberschicht erfährt eine Prägung gleichzeitig mit der Verbindung der Druckschicht, der koextrudierten Oberschicht und einer unter der Druckschicht anzubringenden Basisschicht aus gefärbtem, trübem thermoplastischem Elastomer, wobei auf der Basisschicht eine Primerschicht oder eine Klebeschicht aufgebracht werden kann oder die mehrschichtige Oberschicht eine Haftvermittlerschicht erhalten kann.

Es sind auch bereits Verbundmaterialien beschrieben worden, die versuchen, die Vorteile von preisgünstigen Polyolefinen als Substratmaterial mit den überlegenen mechanischen Eigenschaften polarer Polymere zu verbinden. Hierbei stoßen die Bemühungen bis heute auf Schwierigkeiten, einen sicheren, beständigen Verbund der Schichten, möglichst ohne Verwendung von Klebstoff zu gewährleisten, ein effizientes, kontinuierliches Verfahren für die Herstellung des Verbundes bereitzustellen und das Herstellungsverfahren so auszugestalten, daß das Erscheinungsbild der Mehrschichtfolie höchsten ästhetischen Anforderungen genügt und als Ersatz für natürliche Werkstoffe wie beispielsweise Holz-, Stein- oder Korkoberflächen dienen kann. WO 95/08593 A1 beschreibt abnutzungsbeständige Bodenbeläge als Alternative zu PVC-Bodenbelägen, die eine transparente Deckschicht aus Ionomer, über eine Klebstoffschicht auf eine Dekorschicht auflaminiert, aufweist. DE 41 07 150 A1 beschreibt eine mehrschichtige Fußbodenbelagfolie, wobei eine Oberfolie, die polare Gruppen enthaltenden Kunststoff enthält, über eine Haftschicht, Haftfolie Reaktantschicht oder Haftvermittlerschicht auf eine Unterfolie angeordnet wird. DE 10 2012 103 016 A1 beschreibt einen Folien-Kaschierverbund mit mindestens zwei Kunststofffolien, enthaltend eine Trägerfolie und eine Nutzfolie, wobei die Nutzfolie auf einer Seite der Trägerfolie angeordnet ist und bedruckt sein kann, die Trägerfolie eine vorzugsweise pigmentierte Polyolefin-Folie ist und die Nutzfolie aus einem thermoplastischen Polyurethan besteht. Diese Kaschierverbünde werden ausdrücklich unter Vermeidung eines Dekorpapiers in Kleb- oder Heißkaschierung hergestellt und werden zur Verwendung in der Fußboden-, Möbel-, Interieur- und/oder Exterieur-Industrie empfohlen. Prägungen und damit verbundene Probleme werden in diesen Schriften nicht angesprochen.

Herkömmlich werden Prägungen auf der Sichtseite von gattungsgemäßen Folien, beispielsweise zur Imitation der Oberfläche der genannten natürlichen Werkstoffe in einem diskontinuierlichen Verfahren durch Heißprägung oder Prägung der erkalteten Folien nach der Aufkaschierung auf eine bedruckte Dekorschicht oder diskontinuierlich oder kontinuierlich vor der Verbindung mit der Dekorschicht ausgeführt. Hierbei wird beispielsweise eine sichtseitige Polymerschicht nach Profilextrusion auf etwa 140 °C heruntergekühlt, mit Klebstoff bestrichen und mit einer rückseitigen Dekorschicht versehen. Das Prägemuster wird dann aufgeprägt. Dieses Verfahren hat den Nachteil, daß durch Relaxation des geprägten Kunststoffs einerseits die Prägetiefe auf der Sichtseite geringer ist als vom Prägestempel vorgegeben, das Prägebild durch Lufteinschluß beeinträchtigt ist und andererseits eine Durchprägung auf die der Sichtseite abgewandte Seite, die Substratseite, erfolgt. Hierdurch wird der Klebstoffauftrag auf der Substratseite erschwert, bzw. der Klebstoffbedarf erhöht, um eine zufriedenstellende Verbindung mit dem Substrat herzustellen.

WO 2012/001109 A1 beschreibt ein Verfahren zur Herstellung von Bodenelementen, bei denen auf eine polymere Kompositschicht, in der Regel eine WPC-Schicht, mittels Schmelzlaminierung klebstofffrei zunächst eine dekortragende Schicht aufgetragen wird und diese nach Bedruckung gegebenenfalls sukzessive mit einer Haftvermittlerschicht und einer Ionomerschicht überzogen wird, wobei das Verfahren mit einer anschließenden Prägung abgeschlossen werden kann. Alternativ kann nach WO 2012/001109 A1 auch ein Schichtverbund aus Ionomerschicht und Polymerschicht vorgefertigt und bei Auflaminierung auf ein Substrat wie WPC kontinuierlich oder diskontinuierlich geprägt werden. Diese Verfahren werfen weiterhin die Fragen nach einem optimalen Verhältnis von Prägung und Durchprägung auf, nach einer ökonomischen kontinuierlichen Verfahrensführung, die eine zweite Aufheizung oder weitere Aufheizvorgänge vermeidet und geeignet ist, universell einsetzbare Mehrschicht-Verbundfolien bereitzustellen.

Die vorliegende Erfindung löst die angesprochenen Probleme und verbindet erstmalig die ästhetischen Vorteile natürlicher Werkstoffe, die ökologischen, nichttoxischen Vorteile von PVC- Ersatzpolymeren und die ökonomischen, verarbeitungstechnischen und mechanischen Vorteile von PVC-Folien. Erfindungsgemäß wird die Aufgabe gelöst durch eine Mehrschicht-Verbundfolie umfassend mindestens die folgenden unmittelbar aufeinanderfolgenden, miteinander haftend verbundenen Schichten A-B-C:

A: sichtseitig eine Polymerschicht umfassend 1 bis 100 Gew.-%, bevorzugt 10 bis 90 Gew.-%, extrudierbares thermoplastisches polyurethanhaltiges Polymer und/oder Ionomer;

B: eine Haftvermittlerschicht umfassend einen oder mehrere modifizierte Kunststoffe zur Haftvermittlung;

C: substratseitig eine dekortragende Schicht,

dadurch gekennzeichnet, daß der Schichtenverbund aus den Schichten A und B coextrudiert wird und bei einer Temperatur oberhalb der Schmelztemperatur des Schichtenverbunds mit der dekortragenden Substratschicht schmelzekaschiert wird, während gleichzeitig im selben Schritt der Mehrschicht-Verbundfolie auf der Sichtseite ein oder mehrere Muster plastisch

aufgeprägt werden, wobei der oder die modifizierte Kunststoff(e) zur Haftvermittlung in Anspruch 1 definiert wird/werden.

Die sichtseitige Polymerschicht umfaßt vorteilhaft 1 bis 100 Gew. -% extrudierbares polyurethanhaltiges Polymer, insbesondere 10 bis 90 Gew.-%, ganz besonders 50 bis 80 Gew.-%. Vorteilhaft sind reines polyurethanhaltiges Polymer (96 bis 100 Gew.-%) oder auch Gemische mit anderen extrudierbaren Polymeren.

Alternativ oder zusätzlich kann die sichtseitige Polymerschicht vorteilhaft 1 bis 100 Gew.-% extrudierbares thermoplastisches Ionomer, insbesondere 10 bis 90 Gew.-%, ganz besonders 50 bis 80 Gew.-%. Vorteilhaft sind reines polyurethanhaltiges Polymer (96 bis 100 Gew.-%) oder auch Gemische mit anderen extrudierbaren Polymeren. Besonders vorteilhaft sind Ionomer-Blends, beispielsweise Blends von Ionomer(en) mit Polyamid(en) oder Ionomere, die eine Dichte (DIN EN ISO 1183-1:2013-04) im Bereich von 0,8 bis 1,2 g/cm$^3$, insbesondere 0,9 bis 1,0 g/cm$^3$, ganz besonders etwa 0,94 bis 0,96 g/cm$^3$ aufweisen. Bevorzugt werden Ionomere, die einen Schmelzindex (Melt flow index MFI, bei 190 °C und 2,16 kg nach (DIN EN ISO 1183-1:2013-04) im Bereich von 0,4 bis 7,0 g/10 min, insbesondere 0,5 bis 5,7 g/10 min, ganz besonders vorteilhaft 0,6 bis 0,9 g/10 min oder auch 5,3 bis 5,6 g/10 min. Der Schmelzpunkt (DIN EN ISO 3146:2002-06) des eingesetzten Ionomers liegt vorteilhaft im Bereich von 85 bis 98 °C, insbesondere 88 bis 97 °C, ganz besonders vorteilhaft 89 bis 92 °C, oder auch 94 bis 96 °C. Der Erweichungspunkt (vicat softening point, DIN EN ISO 306:2012-01) des eingesetzten Ionomers liegt vorteilhaft im Bereich von 60 bis 70 °C, insbesondere 62 bis 68 °C, ganz besonders vorteilhaft bei etwa 65 °C.

Erfindungsgemäß umfasst/umfassen der oder die modifizierte Kunststoff(e) zur Haftvermittlung ein oder mehrere mit Maleinsäureanhydrid, alkyliertem Maleinsäureanhydrid und/oder Carbonsäure modifizierte(s) Polymer(e).

Die Haftvermittlerschicht B kann hierbei eine homogene Schicht darstellen. Sie kann alternativ mehrere, beispielsweise zwei, drei oder mehr Schichten umfassen, die jeweils gleiche oder verschiedene der obengenannten modifizierten Kunststoffe zur Haftvermittlung enthalten. In manchen Ausführungsformen wird durch eine Abfolge unterschiedlicher haftvermittelnder modifizierter Kunststoffe eine bessere Haftung der Schichten A und C erzielt.

Der Schichtenverbund aus den Schichten A und B wird bei Temperaturen coextrudiert, bei denen die Polymere aufgeschmolzen sind. Vorzugsweise erfolgt die Coextrusion bei Temperaturen im Bereich 100 bis 400 °C, besonders bevorzugt im Bereich von 200 bis 300 °C. Der folgende Schritt der Prägung und Schmelzekaschierung erfolgt, solange sich der coextrudierte Schichtverbund oberhalb der Schmelztemperatur befindet. Typischerweise können Prägung und Schmelzekaschierung bei Temperaturen oberhalb 200 °C, insbesondere oberhalb 230 °C, beispielsweise bei mindestens 250 °C, aber vorteilhaft unterhalb von 280 °C oder 260 °C erfolgen. Vorteilhaft erfolgt die Prägung und Schmelzekaschierung in derselben Maschine zeitlich und räumlich unmittelbar im Anschluß an die Coextrusion.

Die Gleichzeitigkeit des Prägens und Schmelzekaschierens bewirkt, daß eine realistische Prägetiefe auf der Sichtseite der Mehrschichtverbundfolie erzielt werden kann, während das Problem des "Durchprägens" auf die Substratseite vollständig oder weitestgehend vermieden werden kann. Dadurch, daß der coextrudierte Schichtenverbund A-B noch nicht erkaltet ist und die Prägung praktisch in der Schmelze erfolgt, erfolgt keine wahrnehmbare oder lediglich minimale Relaxation nach der Prägung. Erfindungsgemäß ist überraschend möglich, die "Durchprägung" weitestgehend zu vermeiden und gleichzeitig ein hohes Maß an Abriebfestigkeit und geringes Staining zu erzielen.

Zudem ist das Verfahren in hohem Maße wirtschaftlich, da ein weiterer Aufheizvorgang für die Kaschierung nicht benötigt wird. Des weiteren ermöglicht das erfindungsgemäße Verfahren eine zuverlässige Verbindung zwischen Substrat, dekortragender Schicht und sichtseitiger Polymerschicht enthaltend thermoplastisches polyurethanhaltiges Polymer und/oder Ionomer. Eine Laminierung des weichen Materials der sichtseitigen Polymerschicht ist dagegen mit großen Schwierigkeiten verbunden.

Ein Maß für die "Durchprägung" stellt der dimensionslose Prägetiefeindex $I_P$ dar. Er berechnet sich aus dem Verhältnis der Prägetiefe auf der Sichtseite zur Durchprägung auf der Substratseite, jeweils gemessen als gemittelte Rauhtiefe $R_z$ (DIN EN ISO 4287:2010-07) geteilt durch die Dicke des Schichtverbundes A-B-C, multipliziert mit 1000, alle Werte in $\mu$m:

$$I_P = R_Z \text{ (Sichtseite) x } 1000/(R_Z(\text{Substratseite) x Dicke (A-B-C)}}$$

Nach dem Erkalten wird erfindungsgemäß vorzugsweise ein Prägetiefeindex von mindestens 6,0 erzielt. Für manche Anwendungen ist ein Prägetiefeindex von mindestens 8,0 oder mindestens 9,5 oder von 10 bis 20, bevorzugt mindestens 13 oder noch vorteilhafter mindestens 14 oder mindestens 16 erzielbar. Erfindungsgemäß können Prägetiefeindizes bis zu 30 oder höher erzielt werden.

Ein Vorteil eines großen Prägetiefeindexes besteht darin, daß auf der Sichtseite eine warme, weiche, trittschalldämmende plastische Ausgestaltung erfolgen kann, die beispielsweise den haptischen und optisch-ästhetischen Eindruck groben Holzes und groben Natursteins realistisch nachahmt, während die Schichtoberfläche auf der Substratseite so glatt und eben wie möglich gehalten werden kann. Dadurch wird die Verbindung zu einem Substrat E erleichtert. Beispielsweise wird die benötigte Menge an Klebstoff für eine Verbindung zu einem Substrat E minimiert. Zusätzlich stellt die vorliegende Erfindung erstmalig Strukturfolien ohne zusätzlichen sichtseitigen Schutz durch Lack- oder Harzschicht(en) zur Verfügung, die dennoch geeignet sind, die Anforderungen an Abriebbeständigkeit, chemische Beständigkeit, Kratzfestigkeit, geringes Staining, hohe Zähigkeit, gutes Rückstellvermögen zu erfüllen. Vorteilhaft ist die erfindungsgemäße Mehrschicht-Verbundfolie frei von PVC und/oder Melaminharz.

Erfindungsgemäß kann die dekortragende Schicht bedrucktes Papier und/oder bedruckte Kunststofffolie umfassen. Hierbei kann die Kunststofffolie monoaxial oder biaxial verstreckt sein. Wegen der erhöhten Brillianz kann ein Foliendruck erfindungsgemäß besonders bevorzugt sein. Besonders bevorzugt werden erfindungsgemäß Druckfarben auf Basis von Kasein (Kaseinfarben). Das Dekor kann farblos, weiß, unifarben oder auch anders gefärbt sein.

In manchen Fällen kann es sinnvoll sein, auf die dekortragende Schicht beispielsweise über einen Kalander einen Primer aufzutragen. Hierdurch kann der Verbund mit dem Schichtenverbund A-B verbessert werden, beispielsweise bevorzugt im Falle der Verwendung von Kasein-Druckfarben. Die Erfindung betrifft in gleicher Weise erfindungsgemäße Schichtverbünde, in denen die substratseitige dekortragende Schicht keinen Primer aufweist.

Die erfindungsgemäß aufgeprägten Muster sind in der Prägetiefe und im Motiv prinzipiell nicht beschränkt, die maximale Prägetiefe wird jedoch durch die Schichtdicke vorgegeben. Die Motive können dabei Imitationen von natürlichen Werkstoffen wie Holz, Stein, Textil, Putzstruktur sein oder jegliches Muster sein, das sich auf einer endlosen Walze darstellen läßt. In besonders vorteilhafter Weise läßt sich erfindungsgemäß das aufgeprägte Muster mit dem gedruckten Muster synchronisieren, so daß beispielsweise bei einer Holzimitation die Maserung im haptischen Eindruck mit dem optischen Eindruck übereinstimmt. Eine Ausführung des jeweiligen Musters als endlose und unterbrechungslose Wiederkehr verstärkt den naturidentischen Eindruck noch.

Das Polymer der Polymerschicht A der Mehrschicht-Verbundfolie der vorliegenden Erfindung kann vorteilhaft aus thermoplastischem Polyurethan oder Ionomer, beispielsweise Surlyn®-Ionomer oder deren Gemischen ausgewählt sein. Von Vorteil ist dabei, wenn das Polymer der sichtseitigen Polymerschicht A , beispielsweise ein Ionomer, transparent, und/oder klar ist. Bevorzugt ist das Dekor durch die Schichten A und B hindurch sichtbar.

Der oder die modifizierte Kunststoff(e) zur Haftvermittlung kann/können vorteilhaft ein oder mehrere Copolymer(e) oder gepfropfte (Co-)Polymere von Carbonsäurefunktionalität tragenden Monomeren, insbesondere Maleinsäureanhydrid und/oder alkyliertem Maleinsäureanhydrid mit Polypropylen, Polyethylen (bspw. LDPE oder LLDPE), Ethyl-Vinylacetat (EVA), Ethylen-Butyl-Acrylat (EBA), Ethylen-Ethl-Acrylat (EEA), Ethylen-Acrylsäure (EAA), Ethylen-Methacrylsäure (EMAA), Maleinsäureacetat (MAH) und/oder Polyacrylat-Kautschuk (ACM) umfassen.

In einer Ausführungsform der Erfindung enthält die dekortragende Schicht C ein extrudierbares thermoplastisches Polymer, ausgewählt aus der Gruppe bestehend aus Polyethylenen, Polypropylenen und Polybutylenen, Polystyrol, Polyamid, Polyester wie Polyethylenterephthalat (PET) sowie deren Gemischen. Ein Vorteil solcher kunststofffolienhaltiger dekortragender Schichten sind ihre gute Bedruckbarkeit, gute Prozeßfähigkeit, ihre Wasserfestigkeit sowie ihre chemische Beständigkeit.

Nicht notwendig, aber typischerweise weisen die Polymerschicht A eine Dicke im Bereich von 1 bis 500 $\mu$m, vorzugsweise 5 bis 200 $\mu$m; und/oder

die Haftvermittlerschicht B eine Dicke im Bereich von 1 bis 100 $\mu$m, vorzugsweise 5 bis 20 $\mu$m, insbesondere 6 bis 10 $\mu$m; und/oder

die Substratschicht C eine Dicke von 1 bis 500 $\mu$m, vorzugsweise 10 bis 150 $\mu$m auf.

Die Mehrscht-Verburtdfolie der vorliegenden Erfindung ist weiterhin vorteilhaft so ausgestaltet, daß sie mindestens die aufeinanderfolgenden, miteinander haftend verbundenen Schichten D-A-B-C umfaßt, wobei Schicht D eine oder mehrere miteinander haftend verbundene Schichten bezeichnet und Schicht D mit Schicht A unmittelbar, über eine Haft- oder Klebeschicht, durch Kaschierung oder durch mechanische Verbindungselemente verbunden ist. Hierbei kann die Schicht D beispielsweise eine Dicke von 1 bis 200 $\mu$m, vorteilhaft 10 bis 100 $\mu$m haben.

Schicht D kann dabei vorteilhaft eine oder mehrere der folgenden Schichten umfassen: weitere Ionomer-Schicht(en), Abdeckschicht, UV-Schutzschicht, Lackschicht, Feuchtigkeitsschutzschicht, mechanische Schutzschicht, Rutschverhindererschicht, oder (Heiß-)Klebeschicht, wobei die Schicht D transparent sein kann und/oder ein Oberflächenprofil aufweisen kann.

Substratseitig kann sich an die Schicht C vorteilhaft erfindungsgemäß eine Substratschicht E anschließen, die mit Schicht C unmittelbar, über eine Haft- oder Klebeschicht, durch Kaschierung oder durch mechanische Verbindungselemente verbunden ist.

Die Schichten A, B, C, D und E können erfindungsgemäß frei von Füll-, Effektstoffen und/oder Pigmenten sein. Andererseits weisen in einer weiteren Ausführungsform der Erfindung eine oder mehrere dieser Schichten, beispielsweise die Schichten D und/oder E, oder die Schichten D und/oder A Füll-, Effektstoffe bzw. Pigmente in einer Menge von 1 bis 100 Gew.-% auf. In einer Ausführungsform ist der Schichtverbund A-B-C oder insbesondere Schicht C frei von anorganischen Füllstoffen, Effektstoffen und/oder organischen oder anorganischen Pigmenten. In einer anderen Ausführungsform kann gerade die Anwesenheit solcher Pigmente oder Füllstoffe in einer oder mehreren der Schichten A-B-C für besondere Effekte sorgen.

Die Mehrschicht-Verbundfolie gemäß der vorliegenden Erfindung kann beispielsweise und ideal als Bodenbelag oder in der Herstellung eines Fußbodenbelags, Bodenbelags, als Wand- oder Dachpaneele oder in der Herstellung von Wand- oder Dachpaneelen, als Möbelfolie, insbesondere in der Herstellung von Sperrholz- oder Spanplatten und/oder als graphische Folie, insbesondere Druckfolie verwendet werden.

Die Erfindung betrifft daher auch einen Bodenbelag, Fußbodenbelag, Wand- und Dachpaneele, eine Möbelfolie, Sperrholz und Spanplatten und graphische Folie, insbesondere Druckfolie umfassend eine erfindungsgemäße Mehrschichtverbundfolie,

Ein erfindungsgemäßer Fußbodenbelag weist dabei vorteilhaft eine weitere, an Schicht C anschließende Substratschicht E auf, die mit Schicht C unmittelbar, über eine Haft- oder Klebeschicht, durch Kaschierung oder durch mechanische Verbindungselemente verbunden ist. Die Substratschicht E umfaßt dabei bevorzugt eine der folgenden Schichten: Rutschverhindererschicht, Wärmedämmschicht, Schall-, insbesondere Trittschalldämpfschicht, Wärmeleitschicht, Klebeschicht, Sperrholz- oder Spanplattenschicht, Wood-Plastic-Composite (WPC)-Schicht, Faserbetonschicht.

Wie oben beschrieben betrifft die Erfindung in gleicher Weise ein Verfahren zur Herstellung einer erfindungsgemäßen Mehrschicht-Verbundfolie, dadurch gekennzeichnet, daß in einem ersten Schritt der Schichtenverbund aus den Schichten A und B coextrudiert wird und dieser Schichtenverbund im zweiten Schritt bei einer Temperatur oberhalb der Schmelztemperatur des Schichtenverbunds mit der dekortragenden Substratschicht schmelzekaschiert wird, während gleichzeitig im selben Schritt der Mehrschicht-Verbundfolie auf der Sichtseite ein oder mehrere Muster plastisch aufgeprägt werden, wobei die Temperatur des Schichtenverbunds zwischen dem ersten und dem zweiten Verfahrensschritt nicht unter die Schmelztemperatur des Schichtenverbunds A-B sinkt.

Vorteilhafterweise wird hierbei der zweite Verfahrensschritt bei einer Temperatur von 150-300 °C ausgeführt. Wie bereits ausgeführt wird das erfindungsgemäße Verfahren bevorzugt kontinuierlich durchgeführt. Bevorzugt wird die Prägung auf der Sichtseite mit dem bedruckten Dekor der dekortragenden Schicht synchronisiert.

Die Coextrusion erfolgt dabei auf konventionelle Weise unter dem Fachmann geläufigen Bedingungen. Die besonderen Eigenschaften der erfindungsgemäßen Mehrschichtverbundfolien werden dadurch erzielt, daß die für sich bekannten Verfahrensschritte des Schmelzekaschierens und Prägens gleichzeitig und ohne erneuten Aufheizvorgang im kontinuierlichen Betrieb durchgeführt werden.

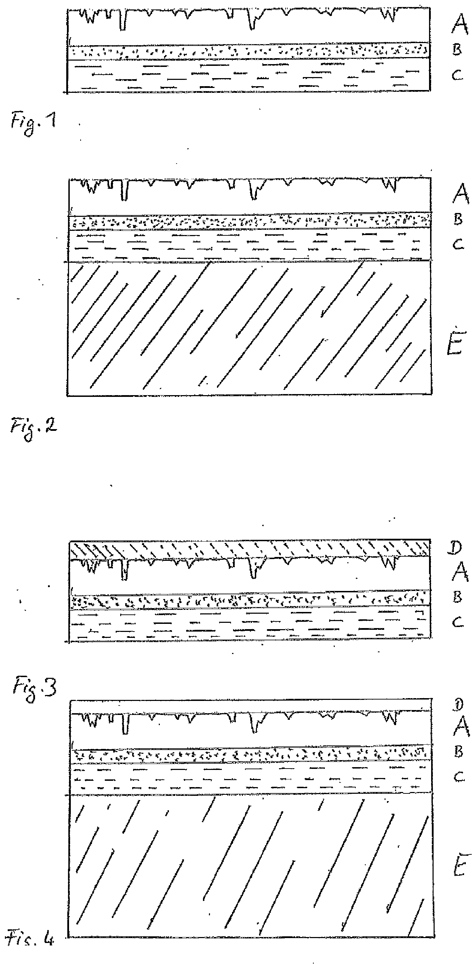

Fig. 1 zeigt einen Querschnitt einer Ausführungstenm der Mehischicht-Verbundfolie der Erfindung mit dem Schichtaufbau A-B-C. Die Schichten sind in diesem Beispiel ausgeführt aus:

Schicht A (100 $\mu$m) Ionomer;
Schicht B (8 $\mu$m) Maleinsäureanhydrid-modifiziertes Polyethylen als modifizierter Kunststoff zur Haftvermittlung;
Schicht C (120 $\mu$m) mit Kaseinfarbe bedrucktes und mit Primer (10 $\mu$m) beschichtetes Papier oder Kunststoffolie.

Fig. 2 zeigt einen Querschnitt einer weiteren Ausführungsform der Mehrschicht-Verbundfolie, beispielsweise als Fußbodenbelag mit dem Schichtaufbau A-B-C-E. Die Schichten sind in diesem Beispiel ausgeführt aus:

Schicht A (100 $\mu$m) Ionomer;
Schicht B (8 $\mu$m) Maleinsäureanhydrid-modifiziertes Polyethylen als modifizierter Kunststoff zur Haftvermittlung;
Schicht C (120 $\mu$m) mit Kaseinfarbe bedrucktes und mit Primer (10 $\mu$m) beschichtetes Papier oder Kunststoffolie;
Schicht E (2000 $\mu$m) WPC.

Fig. 3 zeigt einen Querschnitt einer weiteren Ausführungsform der Mehrschicht-Verbundfolie, beispielsweise als Möbelfolie mit dem Schichtaufbau D-A-B-C. Die Schichten sind in diesem Beispiel ausgeführt aus:

Schicht D (50 $\mu$m) Lack
Schicht A (110 $\mu$m) thermoplastisches Polyurethan;
Schicht B (5 $\mu$m) Maleinsäureanhydrid-modifiziertes Polyethylen als modifizierter Kunststoff zur Haftvermittlung;
Schicht C (100 $\mu$m) mit Kaseinfarbe bedrucktes und mit Primer (10 $\mu$m) beschichtetes PET.

Fig. 4 zeigt einen Querschnitt einer weiteren Ausführungsform der Mehrschichtverbundfolie, beispielsweise als Möbelfolie mit dem Schichtaufbau D-A-B-C-E. Die Schichten sind in diesem Beispiel ausgeführt aus:

Schicht D (80 $\mu$m) Ionomer
Schicht A (120 $\mu$m) Ionomer;
Schicht B (10 $\mu$m) Maleinsäureanhydrid-modifiziertes Polyethylen als modifizierter Kunststoff zur Haftvermittlung;
Schicht C (90 $\mu$m) mit Kaseinfarbe bedrucktes und mit Primer (10 $\mu$m) beschichtetes Papier; Schicht E (1500 $\mu$m) Sperrholzschicht, Holz oder beispielsweise Faserbeton.

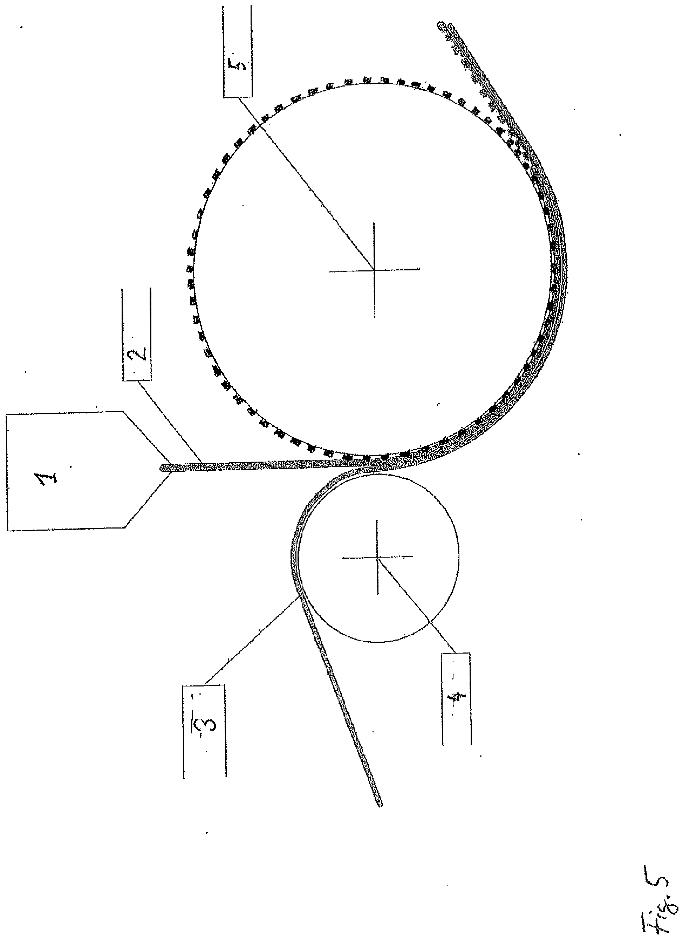

Fig. 5 zeigt einen schematischen und typischen Aufbau des erfindungsgemäßen Verfahrens. Hierbei wird in der Düse (1) ein Verbund aus einer beispielsweise aus Ionomer bestehenden Schicht A mit einer (substratseitigen) Haftvermittlerschicht B als Schmelze (2) bei einer Temperatur von 200 bis 280 °C coextrudiert und unmittelbar darauf bei derselben Temperatur auf der Substratseite mit einer bedruckten Papierschicht C (3), die über eine Walze (4), beispielsweise eine Gummiwalze zugeführt wird, in Verbindung gebracht. Schicht C und der Schichtverbund A-B wird gleichzeitig oder unmittelbar nach dem Zusammenbringen bei Temperaturen beispielsweise im Bereich von 150 bis 300 °C zwischen Prägewalze (5) und Walze (4) schmelzekaschiert und gleichzeitig sichtseitig geprägt.

Beispiele:

Beispiel 1

Eine Mehrschichtverbundfolie mit der folgenden Schichtenfolge wurde nach dem erfindungsgemäßen Verfahren hergestellt. Die Coextrusion der Schichten A und B erfolgte dabei bei 250 °C, die Schmelzekaschierung mit der Folienschicht C (mit Kaseinfarbe mit Holzfaserungsmuster bedruckt und mit Primer versehen) erfolgte unmittelbar anschließend, noch bei 230 °C und einer Anpreßkraft von 30 kN. Herbei wurde sichtseitig ein plastisches Holzmaserungs-Muster aufgeprägt.

Schicht A (300 $\mu$m) Ionomer (Surlyn® 1706 von Dupont);
Schicht B (10 $\mu$m) Maleinsäureanhydrid-modifiziertes Polyethylen als modifizierter Kunststoff zur Haftvermittlung;
Schicht C (120 $\mu$m) mit Kaseinfarbe bedrucktes und mit Primer (10 $\mu$m) beschichtete Polypropylen-Folie.

Tabelle 1 listet einige Parameter zur Charakterisierung der Mehrschichtverbundfolie des Beispiels 1 auf.

Tabelle 1:

| | |
|---|---|
| Gesamtdicke A-B-C | 431 $\mu$m |
| Prägetiefeindex $I_P$ (gemittelt aus zwei Meßwerten, dimensionslos) | 14,1 |
| Dichte | 0,973 g/cm$^3$ |
| Flächengewicht | 4,189 g/100cm$^2$ |
| E-Modul längs | 458 MPa |
| E-Modul quer | 406 MPa |
| Maximalkraft längs | 177 N (6,47 SO mm$^2$) |
| Maximalkraft quer | 159 N (6,47 SO mm$^2$) |
| Max. Dehnung längs | 246 % |
| Max. Dehnung quer | 201 % |
| Reißdehnung längs | 246 % |
| Reißdehnung quer | 201 % |
| Zugfestigkeit längs | 27 MPa |
| Zugfestigkeit quer | 25 MPa |
| Reißfestigkeit längs | 27 MPa |
| Reißfestigkeit quer | 25 MPa |
| Bruchkraft längs | 175 N |
| Bruchkraft quer | 159 N |

(DIN EN ISO 527-3/1B/200) Die gemittelte Rauhtiefe $R_Z$ wurde bestimmt mit dem Gerät MAHR Perfometer.

Beispiel 2

Je eine Mehrschichtverbundfolie wurde mit den folgenden Schichtenfolgen nach dem erfindungsgemäßen Verfahren hergestellt. Die Coextrusion der Schichten A und B erfolgte dabei bei 250 °C, die Schmelzekaschierung mit einer Papierschicht C (mit Kaseinfarbe mit Holzfaserungsmuster bedruckt und mit 15 $\mu$m Primer versehen) erfolgte unmittelbar anschließend, noch bei 230 °C und einer Anpreßkraft von 30 kN. Herbei wurde sichtseitig ein plastisches Holzmaserungs-Muster aufgeprägt.

Folie 2a

Schicht A (50 $\mu$m) Ionomer (Surlyn 1706 von Dupont de Nemours);
Schicht B (10 $\mu$m) Maleinsäureanhydrid-modifiziertes Polyethylen als modifizierter Kunststoff zur Haftvermittlung;
Schicht C (105 $\mu$m) mit Kaseinfarbe bedrucktes und mit Primer (15 $\mu$m) beschichtetes Dekorpapier.

Gesamtdicke A-B-C: 165 $\mu$m

Folie 2b

Schicht A (250 $\mu$m) Ionomer (Surlyn 1706 von Dupont de Nemours);
Schicht B (10 $\mu$m) Maleinsäureanhydrid-modifiziertes Polyethylen als modifizierter Kunststoff zur Haftvermittlung;
Schicht C (105 $\mu$m) mit Kaseinfarbe bedrucktes und mit Primer (15 $\mu$m) beschichtetes Dekorpapier.

Gesamtdicke A-B-C: 365 $\mu$m

Die Schichtverbundfolien wurden mit Spanplatte/Hotnleltverklebung kaschiert und auf Kratzfestigkeit (DIN 438-2), Scheuerbeständigkeit, Abriebfestigkeit (DIN EN 13329) sowie Fleckenunempfindlichkeit (DIN 438-2) getestet, Die erfindungsgemäßen Schichtverbünde wiesen hierbei durchweg gute bis sehr gute Ergebnisse auf.

**Patentansprüche**

1. Mehrschicht-Verbundfolie umfassend mindestens die folgenden unmittelbar aufeinanderfolgenden, miteinander haftend verbundenen Schichten A-B-C:

   A: sichtseitig eine Polymerschicht umfassend 1 bis 100 Gew.-% extrudierbares thermoplastisches polyurethanhaltiges Polymer und/oder Ionomer;
   B: Haftvermittlerschicht umfassend einen oder mehrere modifizierte Kunststoffe zur Haftvermittlung;
   C: substratseitig eine dekortragende Schicht,

   **dadurch gekennzeichnet, daß** der Schichtenverbund aus den Schichten A und B coextrudiert wird und bei einer Temperatur oberhalb der Schmelztemperatur des Schichtenverbunds mit der dekortragenden Substratschicht schmelzekaschiert wird, während gleichzeitig im selben Schritt der Mehrschicht-Verbundfolie auf der Sichtseite ein oder mehrere Muster plastisch aufgeprägt werden,
   wobei die Temperatur des Schichtenverbunds zwischen dem ersten und dem zweiten Verfahrensschritt nicht unter die Schmelztemperatur des Schichtenverbunds A-B sinkt;
   wobei der oder die modifizierte Kunststoff(e) zur Haftvermittlung ein oder mehrere mit Maleinsäureanhydrid, alkyliertem Maleinsäureanhydrid und/oder Carbonsäure modifizierte(s) Polymer(e), umfasst/umfassen, insbesondere ein oder mehrere Copolymer(e) oder gepfropfte (Co-)Polymere von Carbonsäurefunktionalität tragenden Monomeren, insbesondere Maleinsäureanhydrid und/oder alkyliertem Maleinsäureanhydrid mit Polypropylen, Polyethylen, Ethyl-Vinylacetat (EVA), Ethylen-Butyl-Acrylat (EBA), Ethylen-Acrylsäure (EAA), Ethylen-Methacrylsäure (EMAA), Maleinsäureacetat (MAH) und/oder Polyacrylat-Kautschuk (ACM).

2. Mehrschicht-Verbundfolie nach Anspruch 1, **dadurch gekennzeichnet, daß** nach dem Erkalten auf Raumtemperatur der Prägetiefeindex $I_P$ mindestens 6,0 beträgt und der Prägetiefeindex $I_P$ dimensionslos und wie folgt definiert ist (alle Werte in $\mu$m):
   $I_P = R_Z$ (Sichtseite) x 1000/($R_Z$(Substratseite) x Dicke (A-B-C), wobei $R_Z$ die gemittelte Rauhtiefe gemäß DIN EN ISO 4287 : 2010-07 ist.

3. Mehrschicht-Verbundfolie nach Anspruch 1 oder 2, **dadurch gekennzeichnet, daß** die dekortragende Schicht bedrucktes Papier und/oder bedruckte Kunststoffolie umfaßt.

4. Mehrschicht-Verbundfolie nach Anspruch 3, **dadurch gekennzeichnet, daß** die dekortragende Schicht C einen Primer aufweist.

5. Mehrschicht-Verbundfolie nach einem der Ansprüche 1 bis 4, **dadurch gekennzeichnet, daß** das aufgeprägte Profil oder Muster mit dem Dekor synchronisiert ist.

6. Mehrschicht-Verbundfolie nach einem der Ansprüche 1 bis 5, **dadurch gekennzeichnet, daß** sie frei von PVC und/oder Melaminharz ist.

7. Mehrschicht-Verbundfolie nach einem der Ansprüche bis 6 **dadurch gekennzeichnet, daß** die dekortragende Schicht C ein extrudierbares thermoplastisches Polymer enthält, ausgewählt aus der Gruppe bestehend aus Polyethylenen, Polypropylenen und Polybutylenen, Polystyrol, Polyamid, Polyester, sowie deren Gemischen.

8. Mehrschicht-Verbundfolie nach einem der Ansprüche 1 bis 7 **dadurch gekennzeichnet, daß** die Polymerschicht A eine Dicke im Bereich von 1 bis 500 $\mu$m, vorzugsweise 5 bis 200 $\mu$m; und/oder die Haftvermittlerschicht B eine Dicke im Bereich von 1 bis 100 $\mu$m, vorzugsweise 5 bis 20 $\mu$m, insbesondere 6 bis 10 $\mu$m; und/oder die Substratschicht C eine Dicke von 1 bis 500 $\mu$m, vorzugsweise 10 bis 150 $\mu$m aufweist.

9. Mehrschicht-Verbundfolie nach einem der Ansprüche 1 bis 8, **dadurch gekennzeichnet, daß** sie mindestens die aufeinanderfolgenden, miteinander haftend verbundenen Schichten D-A-B-C umfaßt, wobei Schicht D eine oder mehrere miteinander haftend verbundene Schichten bezeichnet und Schicht D mit Schicht A unmittelbar, über eine Haft- oder Klebeschicht, durch Kaschierung oder durch mechanische Verbindungselemente verbunden ist.

10. Mehrschicht-Verbundfolie nach Anspruch 9, **dadurch gekennzeichnet, daß** Schicht D eine oder mehrere der folgenden Schichten umfaßt: Abdeckschicht, UV-Schutzschicht, Feuchtigkeitsschutzschicht, mechanische Schutzschicht, Rutschverhindererschicht, oder (Heiß-)Klebeschicht, wobei die Schicht D transparent sein kann und/oder ein Oberflächenprofil aufweisen kann.

11. 12. Verwendung einer Mehrschicht-Verbundfolie gemäß einem der Ansprüche 1 bis 10 als Bodenbelag oder in der Herstellung eines Bodenbelags, als Wand- oder Dachpaneele oder in der Herstellung von Wand- oder Dachpaneelen, als Möbelfolie, insbesondere in der Herstellung von Sperrholz- oder Spanplatten und/oder als graphische Folie, insbesondere Druckfolie.

12. 13. Schichtkörper umfassend eine Mehrschicht-Verbundfolie gemäß einem der Ansprüche 1 bis 10 als Fußbodenbelag oder Möbelfolie.

13. Fußbodenbelag gemäß Anspruch 12, **dadurch gekennzeichnet, daß** er mindestens eine weitere, an Schicht C anschließende Substratschicht E aufweist, die mit Schicht C unmittelbar, über eine Haft- oder Klebeschicht, durch Kaschierung oder durch mechanische Verbindungselemente verbunden ist.

14. Fußbodenbelag gemäß Anspruch 13, **dadurch gekennzeichnet, daß** die Substratschicht E eine der folgenden Schichten umfaßt: Rutschverhindererschicht, Wärmedämmschicht, Schall-, insbesondere Trittschalldämpfschicht, Wärmeleitschicht, Klebeschicht, Sperrholz- oder Spanplattenschicht, Wood-Plastic-Composite (WPC)-Schicht, Faserbetonschicht.

15. Verfahren zur Herstellung einer Mehrschicht-Verbundfolie nach einem der Ansprüche 1 bis 10, **dadurch gekennzeichnet, daß** in einem ersten Schritt der Schichtenverbund aus den Schichten A und B coextrudiert wird und dieser Schichtenverbund im zweiten Schritt bei einer Temperatur oberhalb der Schmelztemperatur des Schichtenverbunds mit der dekortragenden Substratschicht schmelzekaschiert wird, während gleichzeitig im selben Schritt der Mehrschicht-Verbundfolie auf der Sichtseite ein oder mehrere Muster plastisch aufgeprägt werden wobei die Temperatur des Schichtenverbunds zwischen dem ersten und dem zweiten Verfahrensschritt nicht unter die Schmelztemperatur des Schichtenverbunds A-B sinkt.

16. Verfahren nach Anspruch 15, **dadurch gekennzeichnet, daß** der zweite Verfahrensschritt bei einer Temperatur von 150-300 °C ausgeführt wird.

**Claims**

1. A multi-layered composite film, comprising at least the following immediately consecutive and mutually bonded layers A-B-C:

   A: on the visible side, a polymer layer comprising 1 to 100% by weight of extrudable thermoplastic polyurethane-containing polymer and/or ionomer;
   B: a tie layer comprising one or more modified plastics for the tie;
   C: on the substrate side, a decorative layer;

   **characterised in that** the layered composite is coextruded from the layers A and B and hot-melt laminated with the decorative substrate layer at a temperature above the fusion temperature of the layered composite, while simultaneously one or more patterns is/are plastically embossed on the visible side of the multi-layered composite film in the same step,
   wherein the temperature of the layered composite does not drop below the fusion temperature of the layered composite A-B between the first and second method steps,
   wherein the modified plastic(s) for the tie comprise(s) one or more polymer(s) modified with maleic anhydride, alkylated maleic anhydride and/or carboxylic acid, in particular one or more copolymer(s) or grafted (co)polymers of monomers which support carboxylic acid functionality, in particular maleic anhydride and/or alkylated maleic anhydride with polypropylene, polyethylene, ethylene-vinyl acetate (EVA), ethylene-butyl acrylate (EBA), ethylene-acrylic acid (EAA), ethylene-methacrylic acid (EMAA), maleic acetate (MAH) and/or polyacrylate rubber (ACM).

2. The multi-layered composite film according to Claim 1, **characterised in that** the embossing depth index $I_P$ is at least 6.0 once the multi-layered composite film has cooled to room temperature, and the embossing depth index $I_P$ is dimensionless and defined as follows (all values being in micrometres):

$$I_P = R_Z \text{ (visible side)} \times 1000/(R_Z(\text{substrate side}) \times \text{thickness (A-B-C))},$$

where $R_Z$ is the average surface roughness in accordance with DIN EN ISO 4287:2010-07.

3. The multi-layered composite film according to Claim 1 or 2, **characterised in that** the decorative layer comprises paper and/or plastic film which is printed on.

4. The multi-layered composite film according to Claim 3, **characterised in that** the decorative layer C comprises a primer.

5. The multi-layered composite film according to any one of Claims 1 to 4, **characterised in that** the profile or pattern embossed on is synchronised with the decorative pattern.

6. The multi-layered composite film according to any one of Claims 1 to 5, **characterised in that** it contains no PVC and/or melamine resin.

7. The multi-layered composite film according to any one of Claims 1 to 6, **characterised in that** the decorative layer C contains an extrudable thermoplastic polymer selected from the group consisting of polyethylenes, polypropylenes and polybutylenes, polystyrene, polyamide, polyester and mixtures of the same.

8. The multi-layered composite film according to any one of Claims 1 to 7, **characterised in that** the polymer layer A exhibits a thickness in the range of 1 to 500 $\mu$m, preferably 5 to 200 $\mu$m; and/or
the tie layer B exhibits a thickness in the range of 1 to 100 $\mu$m, preferably 5 to 20 $\mu$m, in particular 6 to 10 $\mu$m; and/or
the substrate layer C exhibits a thickness of 1 to 500 $\mu$m, preferably 10 to 150 $\mu$m.

9. The multi-layered composite film according to any one of Claims 1 to 8, **characterised in that** it comprises at least the consecutive and mutually bonded layers D-A-B-C, wherein the layer D denotes one or more mutually bonded layers and is connected to the layer A directly, via a bonding layer or adhesive layer, by lamination or by mechanical connecting elements.

10. The multi-layered composite film according to Claim 9, **characterised in that** the layer D comprises one or more of the following layers: a covering layer, a UV protection layer, a moisture protection layer, a mechanical protection layer, a layer which prevents slipping, or a (heat-melt) adhesive layer, wherein the layer D can be transparent and/or can comprise a surface profile.

11. The use of a multi-layered composite film in accordance with any one of Claims 1 to 10 as a floor covering or in the manufacture of a floor covering, as wall panels or roof panels or in the manufacture of wall panels or roof panels, as furniture film, in particular in the manufacture of plywood board or chipboard and/or as a graphic film, in particular a printed film.

12. A layered body comprising a multi-layered composite film in accordance with any one of Claims 1 to 10 as a floor covering or furniture film.

13. The floor covering according to Claim 12, **characterised in that** it comprises at least one other layer E which is a substrate layer which adjoins the layer C and is connected to the layer C directly, via a bonding layer or adhesive layer, by lamination or by mechanical connecting elements.

14. The floor covering according to Claim 13, **characterised in that** the substrate layer E comprises one of the following layers: a layer which prevents slipping, a heat-insulating layer, a sound-absorbing and in particular impact sound-absorbing layer, a heat-conducting layer, an adhesive layer, a plywood layer or chipboard layer, a wood-plastic composite (WPC) layer and a fibre-reinforced concrete layer.

**15.** A method for manufacturing a multi-layered composite film according to any one of Claims 1 to 10, **characterised in that** the layered composite is coextruded from the layers A and B in a first step and hot-melt laminated with the decorative substrate layer at a temperature above the fusion temperature of the layered composite in a second step, while simultaneously one or more patterns is/are plastically embossed on the visible side of the multi-layered composite film in the same step, wherein the temperature of the layered composite does not drop below the fusion temperature of the layered composite A-B between the first and second method steps.

**16.** The method according to Claim 15, **characterised in that** the second method step is performed at a temperature of 150 to 300 °C.

**Revendications**

**1.** Film composite multicouche comportant au moins les couches A-B-C suivantes mutuellement liées par adhérence et immédiatement consécutives:

A : côté visible, une couche de polymère comportant 1 à 100 % en poids d'un polymère et/ou ionomère contenant un polyuréthane thermoplastique extrudable,
B : une couche d'agent adhésif comportant une ou plusieurs matières plastiques modifiées pour l'adhérence,
C : côté substrat, une couche décorative,

**caractérisé en ce que** le composite stratifié est coextrudé à partir des couches A et B et couché par fusion avec la couche de substrat décorative à une température supérieure à la température de fusion du composite stratifié, alors qu'à la même étape, un ou plusieurs motifs sont simultanément plastiquement gaufrés du côté visible sur le film composite multicouche,
dans lequel la température du composite stratifié ne descend pas entre la première et la seconde étape de procédé sous la température de fusion du composite stratifié A-B,
dans lequel la (ou les) matière(s) plastique(s) modifiée(s) pour l'adhérence comporte(nt) un ou plusieurs polymères modifiés avec un anhydride maléique, un anhydride maléique alkylé et/ou un acide carboxylique, en particulier un ou plusieurs copolymères ou (co)-polymères greffés de monomères porteurs de la fonctionnalité d'acide carboxylique, en particulier un anhydride maléique et/ou un anhydride maléique alkylé avec du poly-propylène, du polyéthylène, de l'éthylène-acétate de vinyle (EVA), de l'éthylène-acrylate de butyle (EBA), de l'éthylène-acide acrylique (EAA), de l'éthylène-acide métacrylique (EMAA), de l'acétate maléique (MAH) et/ou du caoutchouc polyacrylate (ACM) .

**2.** Film composite multicouche selon la revendication 1, **caractérisé en ce qu'**après le refroidissement à température ambiante, l'indice de profondeur de creux $I_P$ est d'au moins 6,0 et l'indice de profondeur de creux $I_P$ est sans dimension et défini comme suit (toutes les valeurs sont en $\mu m$) :
$I_P = R_Z$ (côté visible) $\times$ 1000 / $R_Z$ (côté substrat) $\times$ épaisseur (A-B-C), où $R_Z$ représente la profondeur de rugosité moyenne selon la norme DIN EN ISO 4287:2010-07.

**3.** Film composite multicouche selon la revendication 1 ou 2, **caractérisé en ce que** la couche décorative comporte un papier imprimé et/ou une matière plastique imprimée.

**4.** Film composite multicouche selon la revendication 3, **caractérisé en ce que** la couche décorative C comporte un primaire.

**5.** Film composite multicouche selon l'une des revendications 1 à 4, **caractérisé en ce que** le profil ou le motif gaufré est synchronisé avec la décoration.

**6.** Film composite multicouche selon l'une des revendications 1 à 5, **caractérisé en ce qu'**il est exempt de PVC et/ou de résine de mélamine.

**7.** Film composite multicouche selon l'une des revendications 1 à 6, **caractérisé en ce que** la couche décorative C contient un polymère thermoplastique extrudable choisi parmi le groupe constitué de polyéthylène, de polypropylène et de polybutylène, de polystyrène, de polyamide, de polyester ainsi que leurs mélanges.

**8.** Film composite multicouche selon l'une des revendications 1 à 7, **caractérisé en ce que** la couche polymère A a une épaisseur dans la plage de 1 à 500 μm, de préférence de 5 à 200 μm, et/ou
la couche d'agent adhésif B a une épaisseur dans la plage de 1 à 100 μm, de préférence de 5 à 20 μm, en particulier de 6 à 10 μm, et/ou
la couche de substrat C a une épaisseur de 1 à 500 μm, de préférence de 10 à 150 μm.

9. Film composite multicouche selon l'une des revendications 1 à 8, **caractérisé en ce qu'**il comporte au moins les couches D-A-B-C consécutives et mutuellement liées par adhérence, dans lequel la couche D désigne une ou plusieurs couches mutuellement liées par adhérence et la couche D est directement liée à la couche A par une couche adhésive ou collante, par couchage ou par des éléments de liaison mécanique.

10. Film composite multicouche selon la revendication 9, **caractérisé en ce que** la couche D comporte une ou plusieurs des couches suivantes : couche de recouvrement, couche de protection contre les UV, couche de protection contre l'humidité, couche de protection mécanique, couche anti-glissement ou couche de (thermo)-collage, dans lequel la couche D peut être transparente et/ou peut comporter un profil de surface.

11. Utilisation d'un film composite multicouche selon l'une des revendications 1 à 10 comme revêtement de sol ou dans la fabrication d'un revêtement de sol, comme panneau de mur ou de toiture ou dans la fabrication de panneaux de mur ou de toiture, comme film de meuble, en particulier dans la fabrication de panneaux de contreplaqué ou de panneaux de particules et/ou comme film graphique, en particulier un film d'impression.

12. Corps stratifié comportant un film composite multicouche selon l'une des revendications 1 à 10 faisant office de revêtement de sol ou de film de meuble.

13. Revêtement de sol selon la revendication 12, **caractérisé en ce qu'**il comporte au moins une autre couche de substrat E adjacente à la couche C, qui est directement liée à la couche C par l'intermédiaire d'une couche adhésive ou de collante, par couchage ou par des éléments de liaison mécanique.

14. Revêtement de sol selon la revendication 13, **caractérisé en ce que** la couche de substrat E comporte l'une des couches suivantes : couche anti-glissement, couche d'isolation thermique, couche d'absorption phonique, en particulier d'absorption du bruit d'impact, couche de conduction thermique, couche adhésive, couche de panneau de contreplaqué ou de panneau de particules, couche de composite bois-plastique (WPC), couche de béton renforcé par des fibres.

15. Procédé pour fabriquer un film composite multicouche selon l'une des revendications 1 à 10, **caractérisé en ce qu'**à une première étape, le composite stratifié est coextrudé à partir des couches A et B et à une seconde étape, la couche de substrat décorative est couchée par fusion avec ce film composite à une température supérieure à la température de fusion du composite stratifié, alors qu'à la même étape, un ou plusieurs motifs sont simultanément imprimés plastiquement sur le côté visible sur le film composite à plusieurs couches, dans lequel la température du composite stratifié ne descend pas entre la première et la seconde étape de procédé sous la température de fusion du composite à plusieurs couches A-B.

16. Procédé selon la revendication 15, **caractérisé en ce que** la seconde étape de procédé est mise en oeuvre à une température de 150 à 300 °C.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1728624 A1
- WO 2009016500 A1
- WO 9508593 A1
- DE 4107150 A1
- DE 102012103016 A1
- WO 2012001109 A1